# FASCICULE DE BREVET EUROPEEN

(11) **EP 0 384 807 B1**
(45) Date de publication et mention de la délivrance du brevet: **07.04.1993**
(21) Numéro de dépôt: 90400408.2
(22) Date de dépôt: 14.02.1990
(51) Int. Cl.: H02G 7/12

(54) **Procédé et outil pour poser depuis le sol un espaceur de conduteurs d'une ligne électrique aérienne, et espaceur s'y rapportant**
Verfahren und Werkzeug zum Aufsetzen eines Freileitungsdraht-Distanzhalters vom Boden aus und Distanzhalter hierfür
Process and tool for placing on the soil an overhead electrical line wire-spacer, and spacer therefor

(30) Priorité: 24.02.1989 FR 8902412
(43) Date de publication de la demande: 29.08.1990
(73) Titulaire: MANUFACTURE D'APPAREILLAGE ELECTRIQUE DE CAHORS, F-46003 Cahors Cédex (FR)
(72) Inventeur: Bourrières, Philippe, Regourd - 46003 Cahors (FR)
(74) Mandataire: Keib, Gérard

(56) Documents cités:
- US-A- 3 073 890
- US-A- 3 271 510

## Description

La présente invention concerne un procédé pour poser depuis le sol un espaceur de conducteurs d'une ligne électrique aérienne, c'est-à-dire un dispositif destiné à être fixé à deux conducteurs d'une ligne électrique aérienne qui s'étendent sensiblement parallèlement l'un à l'autre pour maintenir entre eux, à distance des poteaux porteurs, un écartement prédéterminé.

La présente invention concerne également un outil pour poser depuis le sol un tel espaceur.

La présente invention concerne aussi un espaceur de conducteurs d'une ligne électrique aérienne, destiné à la mise en oeuvre du procédé.

La présente invention concerne encore la combinaison d'un espaceur pour conducteurs d'une ligne électrique aérienne, et d'un outil pour la pose de cet espaceur. (voir par example US-A- 3073 890).

Comme l'on sait, les espaceurs de conducteurs d'une ligne aérienne ont pour but d'empêcher les conducteurs de se toucher lorsqu'ils oscillent sous l'effet du vent ou d'autres excitateurs mécaniques.

On connaît de nombreux types d'espaceurs de conducteurs d'une ligne aérienne dont la pose est en général peu commode et nécessite que l'opérateur s'élève jusqu'à hauteur des conducteurs au moyen d'une échelle ou d'une nacelle élévatrice.

Le but de l'invention est ainsi de proposer un procédé, un outil et un espaceur qui permettent la pose d'espaceurs depuis le sol.

Selon un premier aspect de l'invention, le procédé pour poser depuis le sol un espaceur sur deux conducteurs d'une ligne électrique aérienne, ledit espaceur comprenant, à chaque extrémité d'un corps allongé, une gorge réceptrice de conducteur électrique et un organe de retenue mobile par rapport au corps entre une position d'ouverture de la gorge et une position de retenue du conducteur électrique dans la gorge, est caractérisé en ce qu'on fixe amoviblement le corps de l'espaceur à un outil monté à l'extrémité d'une perche ou analogue, on accouple des moyens de commande de chaque organe de retenue de l'espaceur à des moyens de manoeuvre portés par l'outil, on approche des conducteurs l'outil et l'espaceur au moyen de la perche ou analogue, on engage dans chaque gorge l'un respectif des conducteurs et à l'aide de premiers moyens de transmission s'étendant le long de la perche, on actionne les moyens de manoeuvre pour placer les organes de retenue en position de retenue, puis à l'aide de seconds moyens de transmission on libère l'outil relativement à l'espaceur.

De préférence, pour engager un conducteur électrique respectif dans chacune des gorges, on engage un premier conducteur dans une première des gorges, puis au moyen de l'outil s'appuyant sur le premier conducteur par la première gorge, on applique audit premier conducteur une force, transversale aux conducteurs, pour placer un deuxième conducteur électrique en face d'une deuxième desdites gorges, puis on engage le deuxième conducteur électrique dans la deuxième gorge.

Ainsi, la pose est possible depuis le sol même si les conducteurs électriques ont entre eux, comme cela est fréquent, un écartement qui diffère de l'écartement normalisé.

Selon un second aspect de l'invention, l'espaceur, en particulier pour la mise en oeuvre du procédé précité, comprenant à chaque extrémité d'un corps allongé au moins une gorge réceptrice de conducteur électrique et un organe de retenue mobile par rapport au corps entre une position d'ouverture de la gorge et une position de retenue du conducteur électrique dans la gorge, est caractérisé en ce que l'une au moins des extrémités du corps comporte deux gorges espacées selon la longueur du corps et séparées par un bossage dont deux bords latéraux opposés sont inclinés de façon à fermer partiellement la gorge adjacente respective.

Ainsi, l'un des conducteurs électriques peut être placé au choix dans l'une ou l'autre des deux gorges associées à la tête comportant deux gorges. Si l'écartement entre les conducteurs est inférieur à l'écartement standard, on placera le conducteur précité dans la gorge qui est la plus éloignée de la gorge associée à l'autre tête, de façon que le bossage empêche ledit conducteur électrique de se rapprocher de l'autre conducteur électrique. Si au contraire l'écartement naturel entre les deux conducteurs électriques est supérieur à l'écartement standard, on placera ledit conducteur électrique dans la gorge qui est la plus proche de la gorge associée à l'autre tête, de façon que le bossage empêche ledit conducteur électrique de s'écarter de l'autre conducteur électrique.

Grâce aux bords inclinés du bossage, qui ferment partiellement chaque gorge de la tête à deux gorges, l'espaceur se trouve déjà fixé provisoirement aux conducteurs électriques avant que l'organe de retenue associé à la tête à deux gorges ait été placé en position de retenue. Ceci facilite considérablement la pose depuis le sol.

Selon un troisième aspect de l'invention, l'outil pour la mise en oeuvre du procédé précité, est caractérisé en ce qu'il comprend une armature présentant des moyens de positionnement pour un espaceur, un organe de verrouillage mobile par rapport à l'armature entre une position de verrouillage de l'espaceur contre les moyens de positionnement, et une position de libération de l'espaceur, des moyens pour commander le passage de l'organe de verrouillage de sa position de verrouillage à sa position de libération, et des moyens de manoeuvre pour faire passer d'une position de dégagement à une position de retenue des organes de retenue appartenant à l'espaceur.

Selon un quatrième aspect de l'invention, la combinaison d'un espaceur et d'un outil de pose pour la mise en oeuvre du procédé selon le premier aspect, dans laquelle l'espaceur comprend, à chaque extrémité d'un corps allongé, une tête munie d'au moins une gorge réceptrice de conducteur électrique et d'un organe de retenue mobile par rapport au corps entre une position d'ouverture de la gorge et une position de retenue du conducteur électrique dans la gorge, est caractérisée en ce que l'outil comprend une armature définissant deux coupelles espacées selon la direction de la longueur de l'armature et destinées à positionner chacune l'une des têtes de l'espaceur par rapport à l'armature, une des coupelles s'ouvrant vers l'autre coupelle, laquelle s'ouvre dans le même sens que la première, présente un évidement pour le passage du corps de l'espaceur, et fait face à un organe de verrouillage mobile par rapport à l'armature entre une position de verrouillage de l'espaceur contre les coupelles et une position de libération de l'espaceur, des moyens pour commander le passage de l'organe de verrouillage de sa position de verrouillage à sa position de libération et des moyens de manoeuvre pour faire passer de la position de dégagement à la position de retenue les organes de retenue appartenant à l'espaceur.

D'autres particularités et avantages de l'invention ressortiront encore de la description ci-après.

Aux dessins annexés, donnés à titre d'exemples non limitatifs :
- la figure 1 est une vue d'ensemble d'une ligne électrique aérienne pendant une opération de pose d'espaceurs;
- la figure 2 est une vue en élévation d'un espaceur selon l'invention avec coupe selon le plan II-II de la figure 3 ;
- la figure 3 est une vue de face de l'espaceur de la figure 2, avec coupe selon le plan III-III de la figure 2;
- la figure 4 est une vue analogue à la figure 2, après pose de l'espaceur sur deux conducteurs électriques dont l'écartement naturel est supérieur à l'écartement standard;
- la figure 5 est une vue partielle analogue au bas de la figure 4 mais montrant la situation lorsque l'écarteur est monté sur deux conducteurs électriques dont l'écartement naturel est inférieur à l'écartement standard ;
- la figure 6 est une vue de l'espaceur, tel que représenté à la figure 2, et monté sur l'outil de pose ;
- la figure 7 est une vue de l'espaceur et de l'outil en coupe selon le plan VII-VII de la figure 6 ;
- la figure 8 est une vue analogue à la figure 6 mais partielle et avec l'organe de verrouillage en position de verrouillage et l'organe de retenue supérieur en position de retenue ;
- la figure 9 est une vue analogue à la figure 8 mais avec l'organe de retenue inférieur en position de retenue et l'organe de verrouillage en position de libération;
- les figures 10 à 12 montrent schématiquement trois étapes de la pose de l'espaceur des figures précédentes sur deux conducteurs électriques ayant un écartement naturel supérieur à l'écartement normalisé ;
- les figures 13 et 14 représentent schématiquement deux étapes de la pose de l'espaceur selon les figures 1 à 9 sur deux conducteurs électriques ayant un écartement naturel inférieur à l'écartement normalisé ;
- la figure 15 est une vue analogue à la figure 2 mais relative à un deuxième mode de réalisation de l'espaceur; et
- les figures 16 et 17 représentent schématiquement deux étapes de la pose d'un espaceur selon la figure 15 sur deux conducteurs électriques ayant un écartement naturel inférieur à l'écartement normalisé.

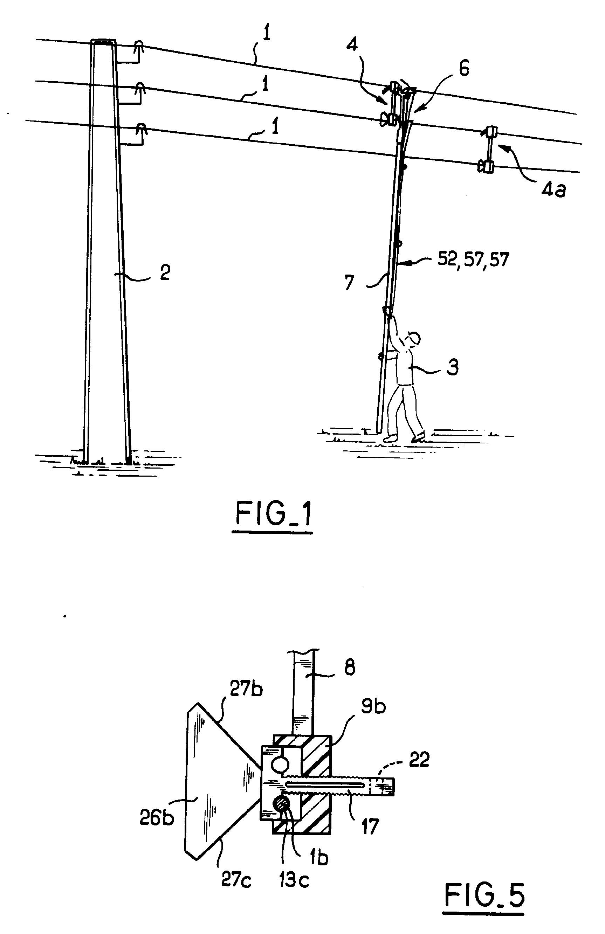

On a représenté à la figure 1 trois conducteurs 1 d'une ligne électrique aérienne, typiquement des câbles, supportés dans un même plan vertical par un poteau 2. Un opérateur 3 a déjà posé sur les deux câbles inférieurs 1 un espaceur 4a selon l'invention. Il est en train de placer un autre espaceur 4 sur les deux câbles supérieurs 1, au moyen d'un outil 6 que l'opérateur 3 manipule depuis le sol au moyen d'une perche isolante 7 à l'extrémité supérieure de laquelle est fixé l'outil 6.

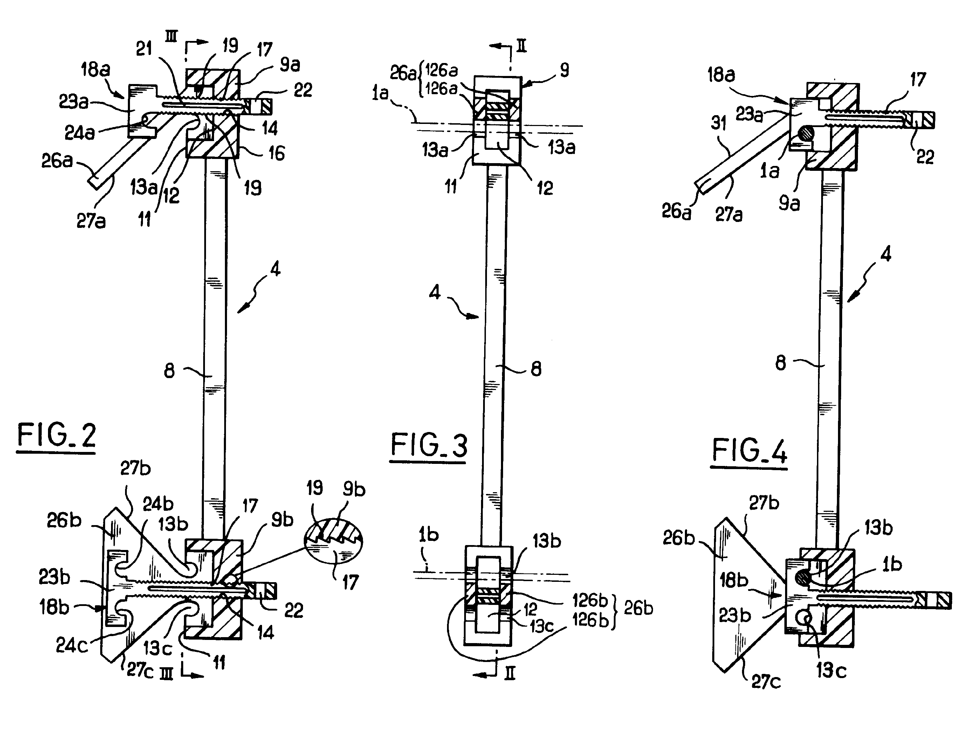

Comme le montrent les figures 2 et 3, l'espaceur 4 comprend un corps allongé 8 réalisé en matière plastique isolante sensiblement rigide ayant une bonne résistance mécanique. A chaque extrémité du corps 8, qui est en forme de tige, est formée d'une seule pièce une tête 9a ou 9b de forme générale parallélépipédique dont une face frontale 11 présente un évidement parallélépipédique 12.

Une ouverture 14 traverse chaque tête 9 entre l'évidement 12 et une face arrière 16 de la tête 9, opposée à la face frontale 11. Dans l'ouverture 14 de chaque tête 9 coulisse avec frottement la tige 17 d'un organe de retenue 18a (dans la tête 9a supérieure) ou respectivement 18b (dans la tête inférieure 9b).

Le coulissement frottant résulte du fait que la tige 17 présente deux faces opposées munies de stries 19 transversales à la direction du coulissement, les faces correspondantes de l'ouverture 14, qui est de section rectangulaire, comportant des stries parallèles à celles de la tige 17. De plus, la tige 17 présente une ouverture aplatie 21 reliant ses deux faces non striées pour donner à la tige 17 une certaine compressibilité élastique dans la direction perpendiculaire aux faces striées. Ainsi, il est possible de déplacer chaque corps de verrouillage 18a ou 18b dans l'ouverture 14 qui lui est associée moyennant franchissement mutuel des stries 19 des tiges 17 et de celles des ouvertures 14, sous l'action d'un effort significatif appliqué aux tiges 17 selon leur direction longitudinale. Par contre, en l'absence d'un tel effort, les organes de retenue 18a, 18b sont immobilisés de manière stable, par interengagement des stries, relativement au corps 8 et aux têtes 9a et 9b.

A son extrémité dépassant à travers la face 16 de la tête 9a ou 9b associée, chaque tige 17 est traversée par un orifice d'accouplement 22 s'étendant parallèlement à la longueur du corps 8. A son extrémité dépassant à travers le fond de l'évidement 12 de la face 11, chaque organe de retenue 18a ou 18b présente un mors 23a et respectivement 23b.

La face frontale 11 de la tête 9a présente une gorge 13a qui est interrompue par l'évidement 12. La gorge 13a est destinée à recevoir le conducteur électrique supérieur 1a (figure 3) des deux conducteurs 1a et 1b sur lesquels l'espaceur doit être fixé. La gorge 13a s'étend sensiblement horizontalement lorsque le corps 8 s'étend verticalement.

Sur la tête 9a, le mors 23a fait face à la gorge de réception de câble 13a ou plus exactement à la partie de la gorge qui est supprimée en conséquence de la présence de l'évidement 12. Le mors 23a présente une contre-gorge 24a en face de la gorge 13a.

Conformément à l'un des aspects de l'invention, la face frontale 11 de la tête inférieure 9b du corps 8 comporte deux gorges 13b et 13c qui sont espacées selon la longueur du corps 8 et séparées par un bossage 26b dont deux bords latéraux opposés 27b et 27c sont inclinés de façon à fermer partiellement la gorge adjacente respective 13b ou 13c de la tête 9b.

De plus, le mors 23b de l'organe de retenue 18b comporte face à chaque gorge 13b ou 13c une contre-gorge 24b ou 24c correspondante. La tige 17 de l'organe de retenue 18b s'étend entre les deux gorges 13b, 13c, qui sont parallèles à la gorge 13a de la tête 9a.

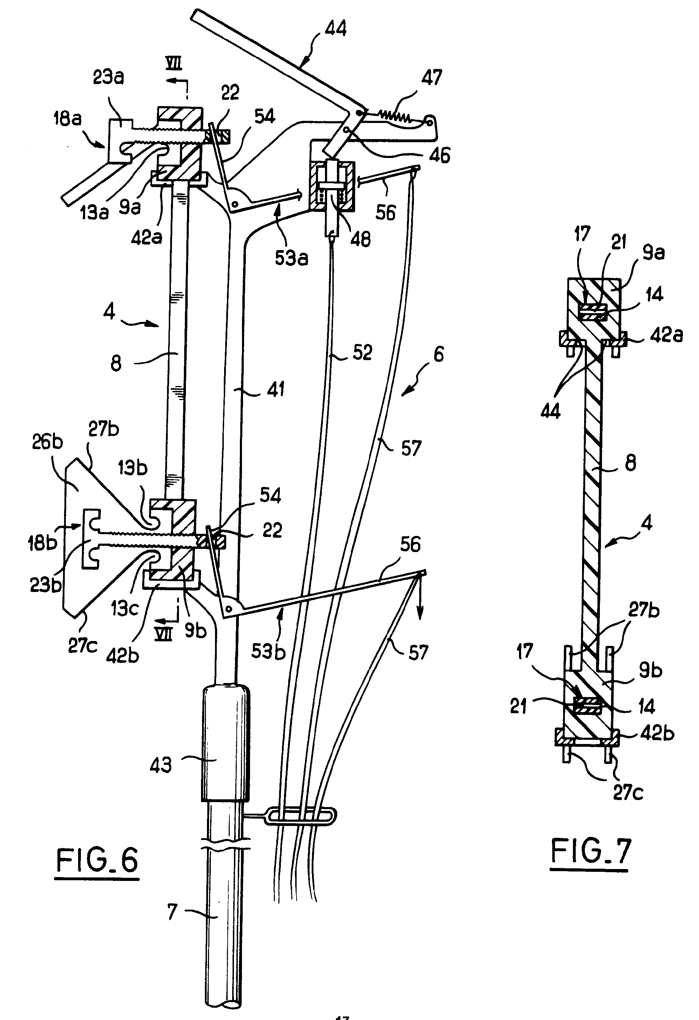

Ainsi, lorsqu'on pose l'espaceur 4 sur les conducteurs 1a et 1b, on peut faire en sorte que le conducteur 1b occupe la gorge 13b comme représenté à la figure 4, ou au contraire qu'il occupe la gorge 13c comme représenté à la figure 5.

La tête 9a comporte sur sa face 11 un bossage 26a qui, relativement à la tête 9b, est situé au-delà de la gorge 13a, et qui présente un bord incliné 27a fermant partiellement la gorge 13a.

Comme le montre la figure 3, les bossages 26a et 26b comprennent chacun deux ailes 126a et 126b situées de part et d'autre de l'évidement 12.

Chaque organe de retenue 18a, 18b est mobile entre une position d'ouverture de la gorge associée 13a ou 13b et 13c (figure 2) et une position de retenue dans laquelle le mors 23a ou 23b est partiellement emboîté dans la cavité 12 et peut serrer le conducteur électrique 1a ou 1b contre le fond de la gorge 13a ou 13b, 13c qu'elle occupe. De préférence, les stries 19 des tiges 17 et les stries correspondantes des ouvertures 14 ont un profil dissymétrique pour permettre de faire passer les organes de retenue en position de retenue moyennant un effort modéré et pour opposer une très grande résistance à un retour des organes de retenue en position d'ouverture des gorges 13a, 13b et 13c.

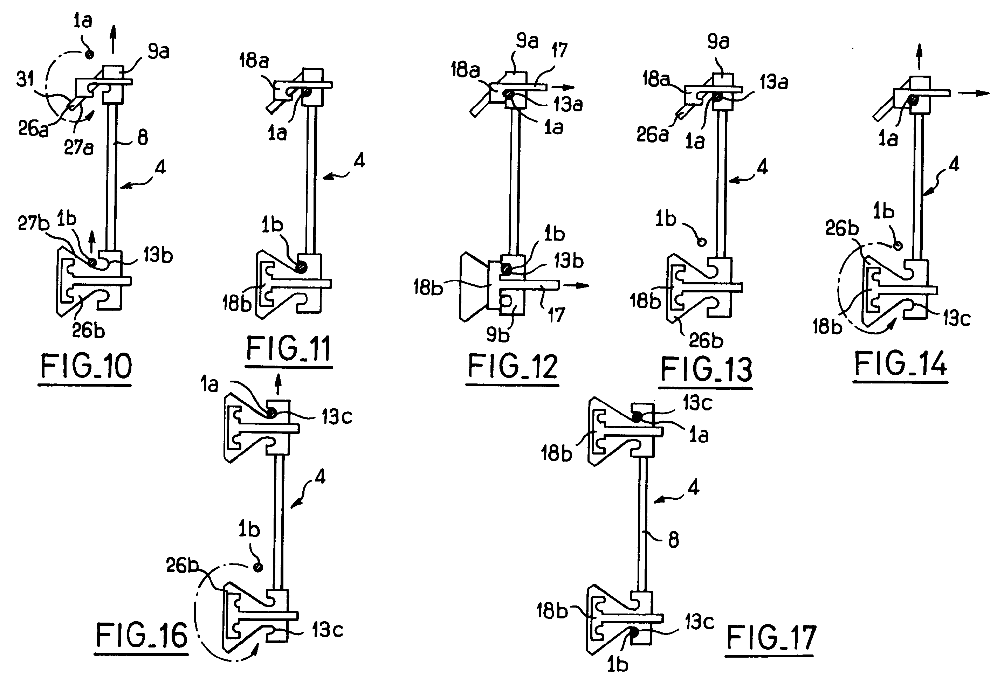

On va maintenant décrire en référence aux figures 10 à 12 la pose de l'espaceur des figures 1 à 4 sur deux conducteurs électriques 1a et 1b dont l'écartement naturel est supérieur à l'écartement standard.

Comme représenté à la figure 10, les organes de retenue 18a, 18b étant initialement en position d'ouverture, on commence par engager le conducteur inférieur 1b dans la gorge 13b, opération qui est facilitée par le bord incliné 27b du bossage 26b, ce bord servant de rampe de guidage.

On sollicite ensuite l'espaceur 4 vers le haut, de manière à appliquer sur le conducteur électrique 1b, par l'intermédiaire des parois de la gorge 13b, une force transversale dirigée vers le haut, qui rapproche le conducteur 1b du conducteur 1a. On arrive ainsi à faire passer la tête supérieure 9a de l'espaceur 4 au-dessus du conducteur 1a, la face supérieure 31 du bossage 26a, laquelle est parallèle au bord incliné 27a du même bossage, servant de rampe qui va chasser latéralement le conducteur 1a pour ensuite le laisser revenir vers le corps 8 sous le bord incliné 27a. En effet, pendant ce mouvement de montée de l'espaceur, le corps 8 reste vertical avec une assez grande précision puisque, comme on le verra plus loin, il est tenu au bout d'une perche pouvant être longue de 6 ou 7 mètres, de sorte que toute inclinaison du corps 8 se traduirait par un grand déplacement latéral de l'extrémité inférieure de la perche. Dans ces conditions, le conducteur électrique 1a effectue, par rapport au corps 8 de l'espaceur 4, sensiblement le trajet indiqué par la flèche en trait mixte à la figure 10. A l'issue de ce trajet, la situation est celle représentée à la figure 11, c'est-à-dire que le conducteur électrique 1b occupe toujours la gorge 13b tandis que le conducteur électrique 1a occupe la gorge 13a. Les bossages 26a et 26b maintiennent les conducteurs électriques 1a et 1b sensiblement à leur écartement standard, en les empêchant de s'éloigner l'un de l'autre, ce qu'ils tendent à faire puisque leur écartement initial était supérieur à l'écartement standard.

Ensuite, comme représenté à la figure 12, on tire sur les tiges 17 des organes de retenue 18a et 18b pour faire passer ceux-ci en position de retenue des conducteurs électriques 1a et 1b dans les gorges 13a et 13b respectivement. A l'issue de cette opération, les conducteurs d'une ligne 1a et 1b sont totalement empêchés de quitter les gorges 13a et 13b même si, sous l'action d'excitateurs mécaniques tels que le vent, la distance entre eux tendait à devenir inférieure à la distance standard.

Pour amener les organes de retenue 18a et 18b en position de retenue, on applique aux tiges 17 un effort supérieur à la force d'adhérence des tiges 17 dans les ouvertures 14 (non représentées à la figure 12) des têtes 9a et 9b, force d'adhérence qui est déterminée par les stries 19.

Dans l'exemple de pose représenté aux figures 13 et 14, les conducteurs d'une ligne 1a et 1b ont un écartement initial qui est inférieur à l'écartement normalisé.

Dans ce cas, on approche l'espaceur 4 des conducteurs 1a et 1b alors que les deux organes de retenue 18a et 18b sont en position d'ouverture, et on fait passer le bossage 26a au-dessus du conducteur 1a pour faire entrer celle-ci dans la gorge 13a de la tête 9a. Le conducteur 1b est donc au-dessus du bossage 26b. A ce stade, on fait passer l'organe de retenue 18a en position de retenue, comme représenté à la figure 14, pour verrouiller le conducteur 1a dans la gorge 13a. Ensuite, on applique à l'espaceur 4 un effort dirigé vers le haut, lequel est transmis par la gorge 13a au conducteur 1a et on fait subir à l'espaceur 4 un déplacement latéral de façon que le conducteur 1b se retrouve sous le bossage 26b, son mouvement par rapport à l'espaceur 4 étant schématisé par la flèche en trait mixte à la figure 14. On fait ensuite passer l'organe de retenue 18b en position de retenue pour aboutir à la situation représentée à la figure 5. Dans cette situation, le bossage 26b empêche le conducteur 1b de s'approcher du conducteur 1a à une distance inférieure à l'écartement standard.

Il est à noter que dans la situation représentée à la figure 11, l'espaceur 4 est déjà pré-verrouillé sur les conducteurs 1a et 1b alors que les organes de retenue 18a et 18b n'ont pas encore été placés en position de retenue, car les conducteurs 1a et 1b qui tendent à s'écarter l'un de l'autre ne permettent pas à l'espaceur 4 de s'échapper.

De même, dans le cas illustré aux figures 13 et 14, l'espaceur 4 est déjà verrouillé provisoirement sur les conducteurs 1a et 1b lorsque le conducteur 1b est installé dans la gorge 13c avant que l'organe de retenue 18b ait été amené en position de retenue, car l'espaceur 4 ne pourrait s'échapper que moyennant un accroissement de l'écartement entre les conducteurs 1a et 1b, alors que ces derniers tendent au contraire à se rapprocher l'un de l'autre.

Ce pré-verrouillage de l'espaceur 4 sur les conducteurs 1a et 1b avant que la pose définitive ne soit achevée, facilite grandement le travail de pose.

On va maintenant décrire, en référence aux figures 6 à 9, l'outil 6 pour la pose de l'espaceur 4 des figures 1 à 5.

L'outil 6 comprend une armature 41 qui comporte des moyens de positionnement pour le corps 8 de l'espaceur. L'armature 41 est allongée parallèlement au corps 8 lorsque l'espaceur 4 est en place sur l'outil. Ces moyens comprennent deux coupelles 42a, 42b, qui sont espacées selon la direction de la longueur de l'armature 41 et qui sont destinées à positionner chacune l'une des têtes 9a et 9b respectivement de l'espaceur. Les coupelles 42a et 42b ont une forme sensiblement rectangulaire, dans laquelle peut s'emboîter la face inférieure de la tête respective 9a ou 9b. La coupelle 42b qui est la plus proche d'un manchon 43 d'accouplement de l'armature 41 avec la perche 7 s'ouvre vers la coupelle 42a, c'est-à-dire vers le haut en service. La coupelle 42a s'ouvre dans le même sens, c'est-à-dire également vers le haut en service, et présente un évidement 44 (figure 7) pour le passage du corps de l'espaceur 4.

Ainsi, les coupelles 42a et 42b qui présentent entre elles une distance correspondant à la distance séparant les faces inférieures des têtes 9a et 9b, immobilisent le corps 8 de l'espaceur 4 à l'encontre des déplacements vers le bas, des déplacements horizontaux, et des rotations. Seul le déplacement du corps 8 vers le haut par rapport à l'armature 41 est permis par les coupelles 42a et 42b.

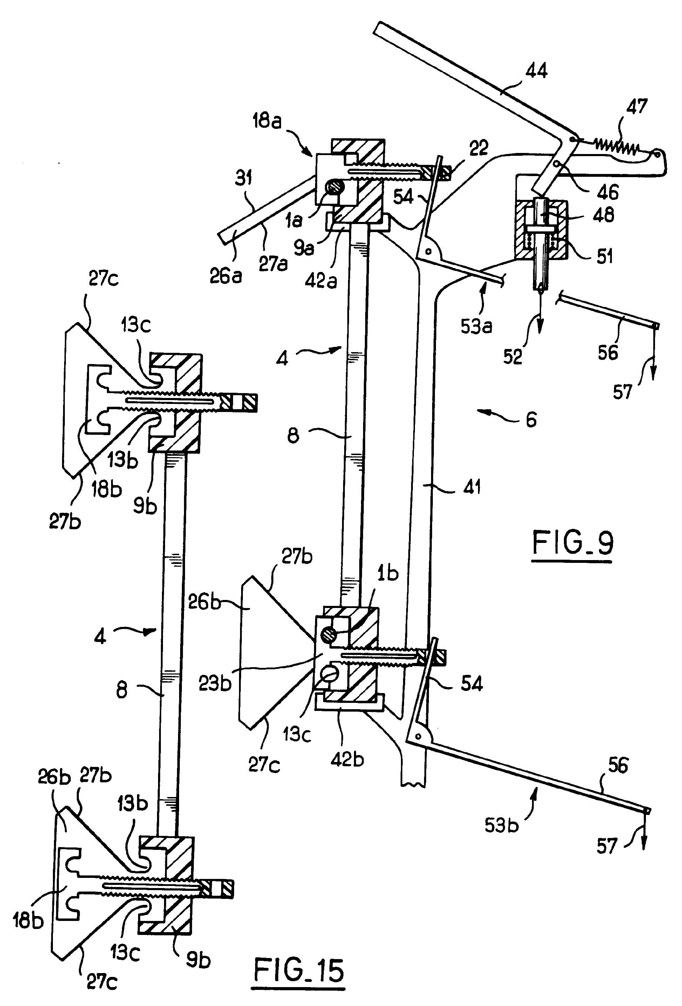

L'outil 6 comprend en outre, en face de la coupelle 42a, un organe de verrouillage 44 qui est mobile par rapport à l'armature 41 entre une position de libération de l'espaceur 4 (figures 6 et 9) et une position de verrouillage de l'espaceur 4 relativement à l'armature 41 de l'outil 6.

Dans l'exemple représenté, l'organe de verrouillage 44 est articulé à l'armature 41 selon un axe 46. En position de libération (figure 6), l'organe de verrouillage 44 permet d'amener un espaceur 4 en position sur les coupelles 42a et 42b par un mouvement vertical dirigé vers le bas par rapport à l'armature 41, et permet par un mouvement relatif de sens contraire, de dégager l'outil 41 d'un espaceur 4 qui vient d'être mis en place sur deux conducteurs électriques tels que les conducteurs 1a et 1b des figures précédemment décrites.

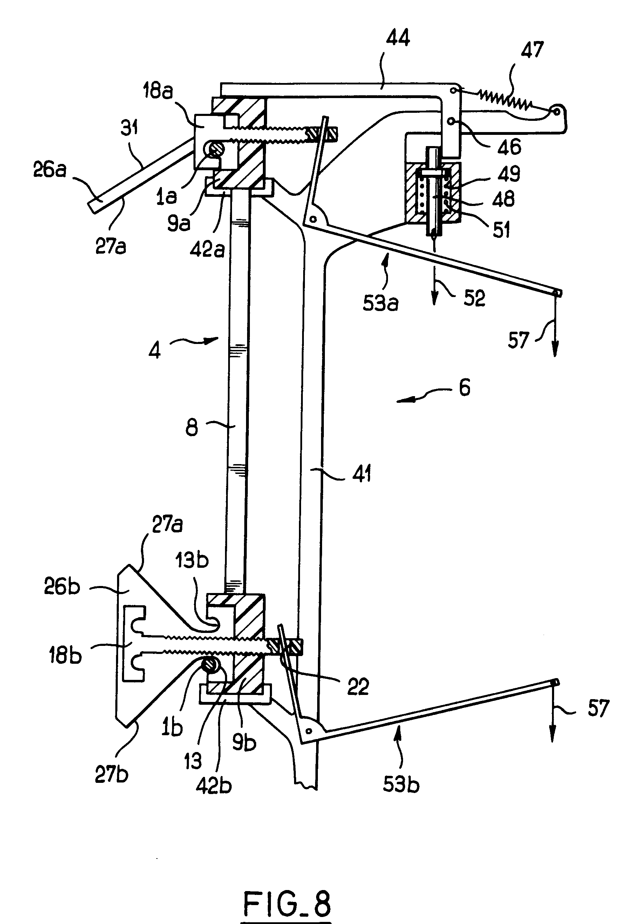

L'organe de verrouillage 44 est rappelé par un ressort 47 vers la position de libération. Un cliquet 48 est monté à coulisse dans un évidement 49 de l'armature 41 entre une position active (figure 8) et une position rétractée (figure 6).

En position rétractée, le cliquet 48 permet à l'organe de verrouillage 44 de se déplacer entre ses positions de verrouillage et de libération, et permet par conséquent au ressort 47 de rappeler l'organe de verrouillage 44 en position de libération. L'organe de verrouillage 44, lorsqu'il est position de libération, maintient le cliquet 48 en position rétractée. C'est la situation représentée à la figure 6, à partir de laquelle il est possible de faire passer l'organe de verrouillage 44 en position de verrouillage à l'encontre de l'effet du ressort de rappel 47. Dès que la position de verrouillage est atteinte, le cliquet 48 passe en position active sous l'action d'un ressort 51. En position active, le cliquet 48 empêche l'organe de verrouillage 44 de passer en position de libération, malgré l'action de rappel du ressort 47.

Comme représenté à la figure 6, le cliquet 48 est relié à un câble de commande 52 guidé le long de la perche 7 et pouvant être actionné en traction par l'opérateur 3 pour faire passer le cliquet 48 en position rétractée et permettre ainsi depuis le sol à l'organe de verrouillage 44 de passer en position de libération sous l'action du ressort de rappel 47.

L'outil 6 comprend en outre des moyens de manoeuvre pour faire passer de la position de dégagement à la position de retenue les organes de retenue 18a et 18b de l'espaceur 4. Ces moyens de retenue comprennent deux leviers coudés 53a, 53b articulés à l'armature 41. Chaque levier 53a, 53b comprend un premier bras 54 dirigé sensiblement dans le même sens que le sens d'ouverture des coupelles 42a et 42b, et un deuxième bras 56 dirigé transversalement à la longueur de l'armature 41 et du corps 8 de l'espaceur. L'extrémité de chaque bras 54 est engagée de manière coulissante et avec jeu latéral dans l'ouverture d'accouplement 22 de l'organe de retenue 18a ou 18b lorsque l'espaceur est en place sur les coupelles 42a et 42b. L'extrémité libre de chaque bras 56 est reliée à un câble 57 respectif qui est guidé le long de la perche 7 pour permettre à l'opérateur 3 de la figure 1 de tirer les bras 56 vers le bas en exerçant une traction sur les câbles 57, de manière à faire pivoter les bras 54 dans le sens tirant les organes de retenue 18a et 18b vers leur position de retenue.

A la figure 6, les deux organes de retenue 18a et 18b sont en position de dégagement. A la figure 8, l'organe de retenue 18a a été tiré en position de retenue par le levier 53a, par l'intermédiaire du câble 57 associé.

En vue notamment des opérations décrites en référence aux figures 13 et 14, les leviers 53a et 53b peuvent être actionnés indépendamment l'un de l'autre au moyen des deux câbles 57.

Pour effectuer les opérations de pose qui ont été décrites en référence aux figures 10 à 14 au moyen de l'outil 6 qui vient d'être décrit en référence aux figues 6 à 9, on place l'organe de verrouillage 44 en position de libération et on place l'espaceur 4 sur les coupelles 42a et 42b en engageant simultanément les bras 54 des leviers 53a et 53b dans les ouvertures 22 des organes de retenue 18a et 18b qui sont en position de dégagement. On notera que cet engagement des bras 54 dans les ouvertures 22 se fait par un mouvement de même direction que le mouvement d'emboîtement des têtes 9a et 9b dans les coupelles 42a et 42b respectivement. A l'issue de ces opérations, la situation est celle représentée à la figure 6.

Pour effectuer ces opérations, l'opérateur a bien entendu placé la perche 7 en position horizontale pour que l'outil 6 et l'espaceur 4 soient à sa portée. L'opérateur peut donc appuyer manuellement sur l'organe de verrouillage 44 pour faire passer celui-ci en position de verrouillage à l'encontre de l'action du ressort 47. Le cliquet 48 passe automatiquement en position active et verrouille par conséquent l'organe 44 dans sa position de verrouillage.

Ensuite, l'opérateur dresse la perche 7 de façon à amener l'outil 6 auquel est fixé l'espaceur 4 à hauteur des conducteurs électriques 1a et 1b.

Grâce à la perche 7, l'opérateur peut, depuis le sol, manoeuvrer l'espaceur 4, tenu par l'outil 6, de façon à effectuer les opérations représentées aux figures 10, 11 et 13.

A l'issue des opérations représentées aux figures 10 et 11, l'opérateur tire depuis le sol sur les deux câbles de transmission 57 pour tirer les deux bras 56 vers le bas, de façon que les deux bras 54 des leviers 53a et 53b tirent les organes de retenue 18a, 18b en position verrouillée, comme cela est représenté figure 9. La pose de l'espaceur 4 est désormais terminée et l'opérateur n'a plus qu'à tirer sur le câble 52 pour faire passer l'organe de verrouillage 44 en position de libération, comme cela est également représenté figure 9. L'opérateur peut ensuite, très facilement, séparer l'outil 6 de l'espaceur 4, simplement en déplaçant l'outil 6 vers le bas par rapport à l'espaceur 4 fixé aux conducteurs 1a et 1b. Ce mouvement vers le bas de l'outil 6 déboîte les coupelles 42a et 42b relativement aux têtes 9a et 9b et dégage les bras 54 des leviers 53a et 53b des ouvertures 22 des organes de retenue 18a et 18b.

Dans le cas de la pose selon les figures 13 et 14, une fois atteinte la situation représentée à la figure 13 par une manoeuvre de l'espaceur 4 au moyen de l'outil 6 manipulé depuis le sol à l'aide de la perche 7, l'opérateur exerce une traction sur le câble 57 commandant le levier 53a de manière à faire passer l'organe de retenue 18a en position de retenue. Ensuite, l'opérateur exerce sur la perche 7 un effort dirigé vers le haut et latéralement pour faire passer le conducteur électrique 1b sous le bossage 26b. La situation est alors celle représentée à la figure 8. L'opérateur exerce alors une traction sur le câble 57 commandant le levier 53b de façon à faire passer l'organe de retenue 18b en position de retenue. Ensuite, l'opérateur exerce une traction sur le câble 52 pour permettre à l'organe de verrouillage 44 de passer en position de libération sous l'action de son ressort de rappel 47, puis l'opérateur dégage l'outil 6 relativement à l'espaceur 4 comme cela a été décrit plus haut.

Dans l'exemple représenté à la figure 15, la tête 9a supérieure des figures précédentes est remplacée par une tête 9b identique à la tête 9b inférieure et identique à la tête 9b des exemples précédents. Ainsi, dans cet exemple, chacune des têtes 9b prévues aux extrémités du corps 8 comporte deux gorges 13b et 13c séparées par un bossage 26b présentant des bords latéraux opposés 27b et 27c qui sont inclinés de manière à fermer partiellement les gorges 13b et 13c respectives. Les deux gorges 13c sont séparées l'une de l'autre par les deux bossages 26b. L'espaceur 4 comporte deux organes de retenue 18b identiques à l'organe de retenue 18b des figures précédentes.

La mise en place de l'espaceur de la figure 15 sur deux conducteurs 1a et 1b dont l'écartement naturel est supérieur à l'écartement normalisé est peu différente de celle décrite en référence aux figures 10 à 12. On commence par placer par exemple le conducteur inférieur 1b dans la gorge 13b inférieure, puis on soulève l'espaceur 4 de manière à faire passer le conducteur 1a sous le bossage 26b supérieur. A ce stade, l'espaceur 4 est pré-verrouillé sur les conducteurs 1a et 1b. L'opérateur tire sur les câbles 57 pour amener les deux organes de retenue 13b en position de verrouillage, puis tire sur l'organe 52 pour libérer l'outil 6 de l'espaceur 4.

Les figures 16 et 17 illustrent la pose d'un espaceur de la figure 15 sur deux conducteurs 1a et 1b dont l'écartement naturel est inférieur à l'écartement normalisé. On commence par placer l'un des conducteurs, par exemple le conducteur 1a supérieur, dans la gorge 13c correspondante, en l'occurrence la gorge 13c supérieure. On exerce ensuite sur la perche 7 un effort dirigé vers le haut de façon à écarter le conducteur 1a déjà en place de l'autre conducteur 1b, et à faire passer le conducteur 1b sous le bossage 26b associé, dans l'autre gorge 13c. A la suite de cela, l'espaceur 4 est pré-verrouillé sur les conducteurs 1a et 1b comme représenté à la figure 17. Ensuite, l'opérateur tire sur les câbles 57 pour amener les organes de retenue 18b en position de retenue, puis tire sur le câble 52 pour libérer l'outil 6 de l'espaceur 4. L'avantage de l'espaceur de la figure 15 est de ne pas nécessiter d'agir séparément sur les deux organes de retenue lorsque les conducteurs électriques 1a et 1b ont un écartement naturel inférieur à l'écartement normalisé.

De préférence, les écarteurs 4 qui viennent d'être décrits sont entièrement réalisés en matière plastique isolante, y compris les organes de retenue 18a et 18b.

L'outil 6 peut être réalisé en toute matière appropriée pour les fonctions mécaniques qui lui sont dévolues. Une conception comportant au moins certaines parties en matière plastique isolante peut renforcer la sécurité d'utilisation.

Bien entendu, l'invention n'est pas limitée aux exemples décrits et représentés.

On peut par exemple prévoir que l'armature 41 s'étend perpendiculairement à la perche 7 pour permettre la pose d'espaceurs entre des conducteurs sensiblement situés dans le même plan horizontal.

Dans l'exemple de pose des figures 10 à 12, on aurait pu prévoir de placer d'abord le conducteur 1a dans la gorge 13a, puis de tirer l'espaceur 4 vers le bas pour faire passer le bossage 26b sous le conducteur électrique 1b, bien que ceci soit a priori moins commode car l'effort à appliquer pour tirer un conducteur vers le bas est relativement important.

## Revendications

1. Procédé pour poser depuis le sol un espaceur (4) sur deux conducteurs d'une ligne électrique aérienne (1a, 1b), ledit espaceur comprenant, à chaque extrémité d'un corps allongé (8), une gorge (13a, 13b, 13c) réceptrice de conducteur électrique et un organe de retenue (18a, 18b) mobile par rapport au corps entre une position d'ouverture de la gorge et une position de retenue du conducteur électrique dans la gorge, caractérisé en ce qu'on fixe amoviblement le corps de l'espaceur à un outil (6) monté à l'extrémité d'une perche (7) ou analogue, on accouple des moyens de commande (22) de chaque organe de retenue de l'espaceur à des moyens de manoeuvre (53a, 53b) portés par l'outil, on approche des conducteurs électriques l'outil et l'espaceur au moyen de la perche ou analogue, on engage dans chaque gorge l'un respectif des conducteurs électriques et à l'aide de premiers moyens de transmission (57) s'étendant le long de la perche, on actionne les moyens de manoeuvre pour placer les organes de retenue en position de retenue, puis à l'aide de seconds moyens de transmission (52) on libère l'outil relativement à l'espaceur.

2. Procédé selon la revendication 1, caractérisé en ce que pour engager un conducteur électrique respectif dans chacune des gorges (13a, 13b, 13c), on engage un premier conducteur électrique dans une première des gorges, puis au moyen de l'outil (6) s'appuyant sur le premier conducteur électrique par la première gorge, on applique audit premier conducteur électrique une force transversale à celui-ci pour placer un deuxième conducteur électrique en face d'une deuxième desdites gorges, puis on engage le deuxième conducteur électrique dans la deuxième gorge.

3. Procédé selon la revendication 2, caractérisé en ce qu'avant de placer le deuxième conducteur électrique (1b) en face de la deuxième gorge (13c), on actionne les premiers moyens de transmission pour faire passer en position de retenue l'organe de retenue (18a) associé à la première gorge (13a).

4. Procédé selon l'une des revendications 2 ou 3, caractérisé en ce qu'on utilise un outil comprenant deux deuxièmes gorges (13b, 13c), à savoir une deuxième gorge de rapprochement (13b) qui est relativement proche de la première gorge et est aménagée pour limiter l'écartement entre le premier et le deuxième conducteur (1a, 1b), et une deuxième gorge d'éloignement (13c) qui est relativement éloignée de la première gorge et est aménagée pour maintenir entre les deux conducteurs électriques (1a, 1b) un écartement minimal prédéterminé, et en ce qu'au titre de l'engagement du deuxième conducteur électrique dans la deuxième gorge, on engage le deuxième conducteur électrique (1b) dans la deuxième gorge de rapprochement (13b) si les deux conducteurs sont relativement éloignés l'un de l'autre, et on engage le deuxième conducteur électrique dans la deuxième gorge d'éloignement (13c) si les deux conducteurs sont relativement rapprochés l'un de l'autre.

5. Procédé selon la revendication 2, caractérisé en ce qu'on utilise un espaceur comprenant deux premières et deux deuxièmes gorges, à savoir une première et une deuxième gorges de rapprochement (13b) relativement proches l'une de l'autre et aménagées pour limiter l'écartement entre le premier et le deuxième conducteur (1a, 1b), et une première et une deuxième gorges d'éloignement (13c) relativement éloignées l'une de l'autre et aménagées pour maintenir entre les deux conducteurs électriques (1a, 1b) un écartement minimal prédéterminé, et en ce que pour engager les conducteurs électriques dans les gorges :
- si les deux conducteurs sont relativement éloignés l'un de l'autre on engage le premier conducteur dans la première gorge de rapprochement, on agit sur l'outil pour solliciter le premier conducteur vers le deuxième conducteur jusqu'à ce que celui-ci soit en face de la deuxième gorge de rapprochement et on engage le deuxième conducteur électrique dans la deuxième gorge de rapprochement ; et
- si les deux conducteurs sont relativement rapprochés l'un de l'autre, on engage le premier conducteur dans la première gorge d'éloignement, on agit sur l'outil pour solliciter le premier conducteur à l'écart du deuxième conducteur jusqu'à ce que celui-ci soit en face de la deuxième gorge d'éloignement et on engage le deuxième conducteur électrique dans la deuxième gorge d'éloignement.

6. Procédé selon l'une des revendications 1 à 5, caractérisé en ce que pour fixer le corps de l'espaceur à l'outil (6), on appuie deux têtes d'extrémité (9a, 9b) du corps chacune contre une surface d'appui respective (42a, 42b) de l'outil, immobilisant le corps par rapport à l'outil à l'égard des déplacements longitudinaux dans un sens, et on appuie sur l'une des têtes (9a) un organe de verrouillage (44) immobilisant le corps (8) par rapport à l'outil (6) à l'égard des déplacements longitudinaux dans l'autre sens, et, pour séparer l'outil relativement à l'espaceur, on libère l'organe de verrouillage à l'aide des seconds moyens de transmission (52), de manière à laisser agir sur l'organe de verrouillage (44) un ressort de rappel (47) vers une position de dégagement.

7. Espaceur, en particulier pour la mise en oeuvre du procédé selon l'une des revendications 1 à 6, comprenant, à chaque extrémité d'un corps allongé (8), au moins une gorge (13a, 13b, 13c) réceptrice de conducteur électrique (1a, 1b) et un organe de retenue (18a, 18b) mobile par rapport au corps entre une position d'ouverture de la gorge et une position de retenue du conducteur électrique dans la gorge, caractérisé en ce que l'une au moins des extrémités du corps comporte deux gorges (13b, 13c) espacées selon la longueur du corps et séparées par un bossage (26b) dont deux bords latéraux opposés (27b, 27c) sont inclinés de façon à fermer partiellement la gorge adjacente respective (13b, 13c).

8. Espaceur selon la revendication 7, caractérisé en ce que l'organe de retenue (18b) prévu à l'extrémité du corps (8) comportant deux gorges (13b, 13c) est agencé pour, en position de retenue, retenir un conducteur électrique (1b) dans l'une ou l'autre des deux gorges.

9. Espaceur selon l'une des revendications 7 ou 8, caractérisé en ce que chaque organe de retenue comprend une tige (7) mobile par coulissement frottant à travers une ouverture (14) du corps, un mors (23a, 23b) en face de la gorge, et des moyens de couplage (22) portés par la tige (17) du côté de l'ouverture qui est opposé à la gorge.

10. Espaceur selon l'une des revendications 7 ou 8, caractérisé en ce que l'organe de retenue (18b) associé à l'extrémité du corps munie de deux gorges (13b, 13c) comprend une tige (17) mobile par coulissement frottant à travers une ouverture (14) du corps située entre les deux gorges, un mors (23b) s'étendant de part et d'autre de la tige, en face des deux gorges, et des moyens de couplage (22) portés par la tige (17) du côté de l'ouverture qui est opposé à la gorge.

11. Espaceur selon l'une des revendications 9 ou 10, caractérisé en ce que la tige (17) de chaque organe de retenue comporte au moins une face striée (19), et l'ouverture (14) associée comporte une face striée correspondante.

12. Espaceur selon l'une des revendications 9 à 11, caractérisé en ce que les moyens de couplage sont des ouvertures (22) pratiquées à travers la tige (17) de chaque organe de retenue selon une direction sensiblement parallèle à la direction d'allongement du corps (8).

13. Outil pour la mise en oeuvre du procédé selon l'une des revendications 1 à 6, caractérisé en ce qu'il comprend une armature (41) présentant des moyens (42a, 42b) de positionnement pour un espaceur (4), un organe de verrouillage (44) mobile par rapport à l'armature entre une position de verrouillage de l'espaceur contre les moyens de positionnement et une position de libération de l'espaceur, des moyens (48, 52) pour commander le passage de l'organe de verrouillage de sa position de verrouillage à sa position de libération et des moyens de manoeuvre (53a, 53b) pour faire passer d'une position de dégagement à une position de retenue des organes de retenue (18a, 18b) appartenant à l'espaceur.

14. Outil selon la revendication 13, caractérisé en ce que les moyens de manoeuvre comprennent, pour chaque organe de retenue, un levier de manoeuvre (53a, 53b) dont un bras (56) est destiné à être accouplé à des moyens de transmission (57) accessibles à l'utilisateur.

15. Outil selon la revendication 14, caractérisé en ce que chaque levier (53a, 53b) est un levier coudé dont ledit bras (56) est sensiblement transversal à la longueur de l'armature (41), et un autre bras (54), transversal au premier, est destiné à être engagé dans une ouverture de commande (22) appartenant à un organe de retenue (18a, 18b) d'un espaceur (4).

16. Outil selon l'une des revendications 13 à 15, caractérisé en ce que les deux organes de manoeuvre (53a, 53b) sont mobiles indépendamment l'un de l'autre.

17. Outil selon l'une des revendications 13 à 16, caractérisé en ce que les moyens de positionnement comprennent deux coupelles (42a, 42b) espacées selon la direction de la longueur de l'armature, l'une (42b) des coupelles s'ouvrant vers l'autre coupelle, laquelle s'ouvre dans le même sens que la première et fait face à l'organe de verrouillage (44).

18. Outil selon l'une des revendications 13 à 17, caractérisé en ce qu'il comprend des moyens (47) de rappel de l'organe de verrouillage (44) vers la position de libération de l'espaceur, et en ce que les moyens pour commander le passage de l'organe de verrouillage de sa position de verrouillage à sa position de libération comprennent un cliquet (48) qui peut être ramené à l'encontre de l'effet d'un ressort (51), d'une position dans laquelle l'organe de verrouillage, s'il est en position de verrouillage, est retenu dans celle-ci, à une position dans laquelle l'organe de verrouillage peut passer en position de libération sous l'action de ses moyens de rappel.

19. Combinaison d'un espaceur et d'un outil de pose pour la mise en oeuvre du procédé selon l'une des revendications 1 à 6, l'espaceur comprenant, à chaque extrémité d'un corps allongé (8), une tête (9a, 9b) munie d'au moins une gorge (13a, 13b, 13c) réceptrice de conducteur électrique, et d'un organe de retenue (18a, 18b) mobile par rapport au corps entre une position d'ouverture de la gorge et une position de retenue du conducteur électrique (1a, 1b) dans la gorge, caractérisée en ce que l'outil (6) comprend une armature (41) définissant deux coupelles (42a, 42b) espacées selon la direction de la longueur de l'armature et destinées à positionner chacune des têtes de l'espaceur par rapport à l'armature, l'une des coupelles (42b) s'ouvrant vers l'autre coupelle (42a), laquelle s'ouvre dans le même sens que la première, présente un évidement (44) pour le passage du corps (8) de l'espaceur, et fait face à un organe de verrouillage (44) mobile par rapport à l'armature entre une position de verrouillage de l'espaceur contre les coupelles et une position de libération de l'espaceur, des moyens (48, 52) pour commander le passage de l'organe de verrouillage de sa position de verrouillage à sa position de libération, et des moyens de manoeuvre (53a, 53b) pour faire passer de la position de dégagement à la position de retenue les organes de retenue appartenant à l'espaceur.

20. Combinaison selon la revendication 19, caractérisée en ce que l'une (9b) au moins des extrémités du corps (8) de l'espaceur (4) comporte deux gorges (13a, 13b) espacées selon la longueur du corps et séparées par un bossage (26b) dont deux bords latéraux opposés (27b, 27c) sont inclinés de manière à fermer partiellement la gorge adjacente respective.

## Patentansprüche

1. Verfahren, um vom Boden her einen Abstandshalter auf zwei Leiter einer durch die Luft geführten elektrischen Leitung aufzubringen, wobei der Abstandshalter an jedem Ende eines langgestreckten Körpers (8) eine den elektrischen Leiter aufnehmende Vertiefung (13a, 13b, 13c) und ein in bezug auf den Körper zwischen einer offenen Position der Vertiefung und einer Position zum Halten des elektrischen Leiters in der Vertiefung bewegliches Halteelement (18a, 18b) umfaßt, dadurch gekennzeichnet, daß der Körper des Abstandshalters an einer am Ende einer Stange (7) oder ähnlichem angebrachten Vorrichtung (6) befestigt wird, Steuermittel (22) eines jeden Halteelementes des Abstandshalters mit von der Vorrichtung getragenen Betätigungsmitteln (53a, 53b) gekoppelt werden, die Vorrichtung und der Abstandshalter mittels der Stange oder ähnlichem an die elektrischen Leiter herangeführt werden, in jede Vertiefung jeweils einer der elektrischen Leiter eingebracht wird und mit Hilfe von ersten Übertragungsmitteln (57), die sich längs der Stange erstrecken, die Betätigungsmittel betätigt werden, um die Halteelemente in die Halteposition zu bringen, und mit Hilfe von zweiten Übertragungsmitteln (52) die Vorrichtung vom Abstandshalter abgelöst wird.

2. Verfahren gemäß Anspruch 1, dadurch gekennzeichnet, daß zum Einbringen jeweils eines elektrischen Leiters in jede der Vertiefungen (13a, 13b, 13c) ein erster elektrischer Leiter in eine erste Vertiefung eingebracht wird, dann mittels der Vorrichtung (6), die sich am ersten elektrischen Leiter über die erste Vertiefung abstützt, auf den ersten elektrischen Leiter eine zu diesem transversale Kraft ausgeübt wird, um einen zweiten elektrischen Leiter gegenüber einer zweiten Vertiefung anzuordnen, und anschließend der zweite elektrische Leiter in die zweite Vertiefung eingebracht wird.

3. Verfahren gemäß Anspruch 2, dadurch gekennzeichnet, daß vor dem Anordnen des zweiten elektrischen Leiters (1b) gegenüber der zweiten Vertiefung (13c) die ersten Übertragungsmittel betätigt werden, um das der ersten Vertiefung (13a) zugeordnete Halteelement (18a) in seine Halteposition zu bewegen.

4. Verfahren gemäß einem der Ansprüche 2 oder 3, dadurch gekennzeichnet, daß eine Vorrichtung verwendet wird, die zwei zweite Vertiefungen (13b, 13c), nämlich eine zweite Annäherungsvertiefung (13b), die sich relativ nahe an der ersten Vertiefung befindet und zur Begrenzung des Abstandes zwischen dem ersten und dem zweiten Leiter (1a, 1b) vorgesehen ist, und eine zweite Entfernungsvertiefung (13c), die sich relativ entfernt von der ersten Vertiefung befindet und zur Aufrechterhaltung eines vorgegebenen kleinsten Abstandes zwischen den zwei elektrischen Leitern (1a, 1b) vorgesehen ist, umfaßt, und daß für die Einbringung des zweiten elektrischen Leiters in die zweite Vertiefung der zweite elektrische Leiter (1b) in die zweite Annäherungsvertiefung (13b) eingebracht wird, wenn die zwei Leiter relativ weit entfernt voneinander sind, und der zweite elektrische Leiter in die zweite Entfernungsvertiefung (13c) eingebracht wird, wenn die zwei Leiter relativ nahe beieinander sind.

5. Verfahren gemäß Anspruch 1, dadurch gekennzeichnet, daß ein Abstandshalter verwendet wird, der zwei erste und zwei zweite Vertiefungen, nämlich eine erste und eine zweite Annäherungsvertiefung (13b), die sich relativ nahe beieinander befinden und zur Begrenzung des Abstandes zwischen dem ersten und dem zweiten Leiter (1a, 1b) vorgesehen sind, und eine erste und eine zweite Entfernungsvertiefung (13c), die relativ entfernt voneinander sind und zur Aufrechterhaltung eines vorgegebenen minimalen Abstandes zwischen den zwei elektrischen Leitern (1a, 1b) vorgesehen sind, umfaßt, und daß zur Einbringung der elektrischen Leiter in die Vertiefungen:
- dann, wenn die zwei Leiter relativ weit entfernt voneinander sind, der erste Leiter in die erste Annäherungsvertiefung eingebracht wird, auf die Vorrichtung eingewirkt wird, um den ersten Leiter in Richtung des zweiten Leiters zu ziehen, bis dieser der zweiten Annäherungsvertiefung gegenüberliegt, und der zweite elektrische Leiter in die zweite Annäherungsvertiefung eingebracht wird; und
- dann, wenn die zwei Leiter relativ nahe beieinander sind, der erste Leiter in die erste Entfernungsvertiefung eingebracht wird, auf die zweite Vorrichtung eingewirkt wird, um den ersten Leiter vom zweiten Leiter wegzuziehen, bis dieser der zweiten Entfernungsvertiefung gegenüberliegt und der zweite elektrische Leiter in die zweite Entfernungsvertiefung eingebracht wird.

6. Verfahren gemäß einem der Ansprüche 1 bis 5, dadurch gekennzeichnet, daß zur Befestigung des Körpers des Abstandshalters an der Vorrichtung (6) zwei Endköpfe (9a, 9b) des Körpers jeweils gegen eine entsprechende Abstützfläche (42a, 42b) der Vorrichtung abgestützt werden, wodurch der Körper in bezug auf die Vorrichtung bezüglich longitudinaler Verschiebungen in einer Richtung unbeweglich gemacht wird, ein Verriegelungselement (44) an einem der Köpfe (9a) abgestützt wird, wodurch der Körper (8) in bezug auf die Vorrichtung (6) bezüglich longitudinaler Verschiebungen in der anderen Richtung unbeweglich gemacht wird, und das Verriegelungselement zur Abtrennung der Vorrichtung vom Abstandshalter mit Hilfe der zweiten übertragungsmittel (52) so abgelöst wird, daß auf das Verriegelungselement (44) eine Rückstellfeder (47) in Richtung der Loslösung einwirken kann.

7. Abstandshalter, insbesondere für die Ausführung des Verfahrens gemäß einem der Ansprüche 1 bis 6, der an jedem Ende eines langgestreckten Körpers (8) wenigstens eine Vertiefung (13a, 13b, 13c) für die Aufnahme eines elektrischen Leiters (1a, 1b) und ein Halteelement (18a, 18b), das in bezug auf den Körper zwischen einer offenen Position der Vertiefung und einer Position zum Halten des elektrischen Leiters in der Vertiefung beweglich ist, umfaßt, dadurch gekennzeichnet, daß wenigstens eines der Enden des Körpers zwei Vertiefungen (13b, 13c) umfaßt, die sich längs des Körpers in einem Abstand befinden und durch einen Vorsprung (26b) getrennt sind, dessen zwei einander gegenüberliegende seitliche Kanten (27b, 27c) so geneigt sind, daß sie die jeweils angrenzende Vertiefung (13b, 13c) teilweise verschließen.

8. Abstandshalter gemäß Anspruch 7, dadurch gekennzeichnet, daß das an dem zwei Vertiefungen (13b, 13c) umfassenden Ende des Körpers (8) vorgesehene Halteelement (18b) angeordnet ist, um in der Halteposition einen elektrischen Leiter (1b) in der einen oder in der anderen der zwei Vertiefungen zu halten.

9. Abstandshalter gemäß einem der Ansprüche 7 oder 8, dadurch gekennzeichnet, daß jedes Halteelement einen Schaft (17), der durch eine Öffnung (14) des Körpers hindurch griffig verschiebbar beweglich ist, eine der Vertiefung gegenüberliegende Spannbacke (23a, 23b) und Kopplungsmittel (22), die vom Schaft (17) auf der der Vertiefung gegenüberliegenden Seite der Öffnung getragen werden, umfaßt.

10. Abstandshalter gemäß einem der Ansprüche 7 oder 8, dadurch gekennzeichnet, daß das dem mit zwei Vertiefungen (13b, 13c) versehenen Ende des Körpers zugeordnete Halteelement (18b) einen Schaft (17), der durch eine zwischen den zwei Vertiefungen angeordnete Öffnung (14) des Körpers hindurch griffig verschiebbar beweglich ist, eine Spannbacke (23b), die sich auf beiden Seiten des Schafts gegenüber den zwei Vertiefungen erstreckt, und Kopplungsmittel (22), die vom Schaft (17) auf der der Vertiefung gegenüberliegenden Seite der Öffnung getragen werden, umfaßt.

11. Abstandshalter gemäß einem der Ansprüche 9 oder 10, dadurch gekennzeichnet, daß der Schaft (17) eines jeden Halteelements wenigstens eine gerillte Seite (19) umfaßt und die zugeordnete Öffnung (14) eine entsprechende gerillte Seite umfaßt.

12. Abstandshalter gemäß einem der Ansprüche 9 bis 11, dadurch gekennzeichnet, daß die Kopplungsmittel Öffnungen (22) sind, die durch den Schaft (17) eines jeden Halteelements hindurch in einer zur Erstreckungsrichtung des Körpers (8) im wesentlichen parallelen Richtung ausgebildet sind.

13. Vorrichtung zur Ausführung des Verfahrens gemäß einem der Ansprüche 1 bis 6, dadurch gekennzeichnet, daß sie eine Strebe (41), die Mittel (42a, 42b) zur Positionierung eines Abstandshalters (4) aufweist, ein Verriegelungselement (44), das in bezug auf die Strebe zwischen einer Verriegelungsposition des Abstandshalters mit den Positionierungsmitteln und einer freien Position des Abstandshalters beweglich ist, Mittel (48, 52) zum Steuern der Bewegung des Verriegelungselements von seiner Verriegelungsposition in seine freie Position und Betätigungsmittel (53a, 53b) zum Bewegen der dem Abstandshalter zugehörigen Haltemittel (18a, 18b) aus einer gelösten Position in eine Halteposition, umfaßt.

14. Vorrichtung gemäß Anspruch 13, dadurch gekennzeichnet, daß die Betätigungsmittel für jedes Halteelement einen Betätigungshebel (53a, 53b) umfassen, von dem ein Arm (56) für die Ankopplung an die von der Bedienungsperson ergreifbaren Übertragungsmittel (57) bestimmt ist.

15. Vorrichtung gemäß Anspruch 14, dadurch gekennzeichnet, daß jeder Hebel (53a, 53b) ein abgewinkelter Hebel ist, von dem der eine Arm (56) im wesentlichen quer zur Längsrichtung der Strebe (41) verläuft und von dem der andere Arm (54), der quer zum ersten verläuft, für den Eingriff in eine einem Halteelement (18a, 18b) eines Abstandshalters (4) zugehörige Steueröffnung (22) bestimmt ist.

16. Vorrichtung gemäß einem der Ansprüche 13 bis 15, dadurch gekennzeichnet, daß die zwei Betätigungselemente (53a, 53b) unabhängig voneinander beweglich sind.

17. Vorrichtung gemäß einem der Ansprüche 13 bis 16, dadurch gekennzeichnet, daß die Positionierungsmittel zwei Schalen (42a, 42b) enthalten, die sich in Längsrichtung der Strebe in einem Abstand befinden, wobei sich die eine (42b) der Schalen zur anderen Schale hin öffnet, die in die gleiche Richtung wie die erste geöffnet und gegenüber dem Verriegelungselement (44) angeordnet ist.

18. Vorrichtung gemäß einem der Ansprüche 13 bis 17, dadurch gekennzeichnet, daß sie Mittel (47) zum Zurückstellen des Verriegelungselementes (44) in die freie Position des Abstandshalters umfaßt und daß die Mittel zum Steuern der Bewegung des Verriegelungselements aus seiner Verriegelungsposition in die freie Position eine Sperrklinke (48) enthalten, die gegen die Wirkung einer Feder (51) aus einer Position, in der das Verriegelungselement dann, wenn es sich in der Verriegelungsposition befindet, in dieser gehalten wird, in eine Position, in der das Verriegelungselement unter der Wirkung seiner Rückstellmittel in die freie Position bewegt werden kann, zurückgefürt werden kann.

19. Kombination eines Abstandshalters und einer Vorrichtung zum Ausführen des Verfahrens gemäß einem der Ansprüche 1 bis 6, wobei der Abstandshalter an jedem Ende eines langgestreckten Körpers (8) einen Kopf (9a, 9b) umfaßt, der mit wenigstens einer Vertiefung (13a, 13b, 13c) für die Aufnahme eines elektrischen Leiters und einem Halteelement (18a, 18b), das in bezug auf den Körper zwischen einer offenen Position der Vertiefung und einer Position zum Halten des elektrischen Leiters (1a, 1b) in der Vertiefung beweglich ist, versehen ist, dadurch gekennzeichnet, daß die Vorrichtung (6) eine Strebe (41), die zwei Schalen (42a, 42b) aufweist, die sich in Längsrichtung der Strebe in einem Abstand befinden und zur Positionierung eines jeden der Köpfe des Abstandshalters in bezug auf die Strebe bestimmt sind, wobei eine der Schalen (42b) zur anderen Schale (42a) hin geöffnet ist, die in der gleichen Richtung wie die erste geöffnet ist, eine Aussparung (44) für den Durchgang des Körpers (8) des Abstandshalters aufweist und einem Verriegelungselement (44) gegenüberliegt, das in bezug auf die Strebe zwischen einer Verriegelungsposition des Abstandshalters mit den Schalen und einer freien Position des Abstandshalters beweglich ist, Mittel (48, 52) zum Steuern der Bewegung des Verriegelungselements aus seiner Verriegelungsposition in seine freie Position und Betätigungsmittel (53a, 53b) zum Bewegen der dem Abstandshalter zugehörigen Halteelemente aus der freien Position in die Halteposition umfaßt.

20. Kombination gemäß Anspruch 19, dadurch gekennzeichnet, daß wenigstens eines (9b) der Enden des Körpers (8) des Abstandshalters (4) zwei Vertiefungen (13a, 13b) umfaßt, die sich in Längsrichtung des Körpers in einem Abstand befinden und durch einen Vorsprung (26b) getrennt sind, dessen zwei einander gegenüberliegende seitliche Kanten (27b, 27c) so geneigt sind, daß sie die jeweils angrenzende Vertiefung teilweise verschließen.

## Claims

1. A method, starting from the ground, for positioning a spacer (4) on two conductors (1a, 1b) in an overhead electric line, the spacer having an elongate body (8) at each end of which there is a groove (13a, 13b, 13c) receiving an electric conductor and a retaining element (18a, 18b) which is movable relative to the body between a groove opening position and a position for retaining the electric conductor in the groove, characterised in that the the spacer body is removably secured to a tool (6) mounted at the end of a pole (7) or the like, control means (22) for each spacer retaining element are coupled to manipulating means (53a, 53b) carried by the tool, the tool and the spacer are brought towards the electric conductors by means of the pole or the like, a respective electric conductor is fitted into each groove and, by means ot first transmission means (57) extending along the pole, the manipulating means are actuated so as to place the retaining elements in the retaining position, after which the tool is released from the spacer by using second transmission means (52).

2. A method according to claim 1, characterised in that in order to fit a respective electric conductor into each of the grooves (13a, 13b, 13c), a first electric conductor is fitted into a first groove, after which the tool (6) is pressed against the first electric conductor via the first groove so as to subject the first electric conductor to a force substantially at right angles thereto in order to place a second electric conductor opposite a second groove, after which the second electric conductor is fitted into the second groove.

3. A method according to claim 2, characterised in that before placing the second electric conductor (1b) opposite the second groove (13c), the first transmission means are actuated so as to move the retaining element (18a) associated with the first groove (13a) into the retaining position.

4. A method according to claim 2 or 3, characterised by use of a tool formed with two second grooves (13b, 13c), i.e. a second bringing-together groove (13b) relatively near the first groove and adapted to limit the spacing between the first and the second conductor (1a, 1b) and a second moving-apart groove (13c) relatively remote from the first groove and adapted to maintain a predetermined minimum spacing between the two electric conductors (1a, 1b), and in order to fit the second electric conductor into the second groove, the second electric conductor (1b) is fitted into the second bringing-together groove (13b) if the two conductors are relatively distant from one another and the second electric conductor is fitted into the second moving-apart groove (13c) if the two conductors are relatively near one another.

5. A method according to claim 2, characterised by use of a spacer formed with two first and two second grooves, i.e. a first and a second bringing-together groove (13b) relatively near one another and adapted to limit the spacing between the first and the second conductor (1a, 1b) and a first and a second moving-apart groove (13c) relatively distant from one another and adapted to maintain a predetermined minimum spacing between the two electric conductors (1a, 1b) and in order to fit the electric conductors in the grooves:
- if the two conductors are relatively distant from one another, the first conductor is fitted into the first bringing-together groove, the tool is used to urge the first conductor towards the second conductor until the second conductor is opposite the second bringing-together groove and the second electric conductor is fitted into the second bringing-together groove, and
- if the two conductors are relatively near one another, the first conductor is fitted into the first moving-apart groove, the tool is used to urge the first conductor away from the second conductor until the second conductor is opposite the second moving-apart groove, and the second electric conductor is fitted into the second moving-apart groove.

6. A method according to any of claims 1 to 5, characterised in that in order to secure the spacer body to the tool (6), two end heads (9a, 9b) of the body are each pressed against a respective bearing surface (42a, 42b) of the tool, thus preventing the body from moving longitudinally in one direction relative to the tool, and a locking means (44) is applied to one head (9a) so as to prevent the body (8) from moving longitudinally in the other direction relative to the tool (6), and in order to separate the tool from the spacer, the locking element is released by using the second transmission means (52), so as to subject the locking element (44) to a spring (47) for returning it towards a disengaged position.

7. A spacer, more particularly for working the method according to any of claims 1 to 6, comprising an elongate body (8) formed at each end with at least one groove (13a, 13b, 13c) receiving an electric conductor (1a, 1b) and a retaining element (18a, 18b) movable relative to the body between a groove opening position and a position for retaining the electric conductor in the groove, characterised in that at least one end of the body is formed with two grooves (13b, 13c) spaced along the body and separated by a protuberance (26b) having two opposite lateral edges (27b, 27c) inclined so as partly to close the respective adjacent groove (13b, 13c).

8. A spacer according to claim 7, characterised in that the retaining element (18b) at the end of the body (8) formed with two grooves (13b, 13c) is adapted, when in the retaining position, to retain an electric conductor (1b) in one or the other of the two grooves.

9. A spacer according to claim 7 or 8, characterised in that each retaining means has a rod (/) movable by sliding friction through an opening (14) in the body, a jaw (23a, 23b) opposite the groove, and coupling means (22) borne by the rod (17) on the side of the opening remote from the groove.

10. A spacer according to claim 7 or 8, characterised in that the retaining means (18b) associated with the end of the body formed with two grooves (13b, 13c) comprises a rod (17) movable by frictional sliding through an opening (14) in the body between the two grooves, a jaw (23b) extending from one to the other side of the rod opposite the two grooves, and coupling means (22) borne by the rod (17) on the side of the opening remote from the groove.

11. A spacer according to claim 9 or 10, characterised in that the rod (17) in each retaining element has at least one corrugated surface (19), and the associated opening (14) has a corresponding corrugated surface.

12. A spacer according to any of claims 9 to 11, characterised in that the coupling means are openings (22) formed through the rod (17) in each retaining element in a direction substantially parallel to the lengthwise direction of the body (8).

13. A tool for working the method according to any ot claims 1 to 6, characterised in that it comprises a frame (41) having means (42a, 42b) for positioning a spacer (4), a locking means (44) movable relative to the frame between a position for locking the spacer against the positioning means and a position for releasing the spacer, means (48, 52) for moving the locking element from the locked position to the released position, and manipulating means (53a, 53b) for moving retaining elements (18a, 18b) belonging to the spacer from a disengaged position to a retaining position.

14. A tool according to claim 13, characterised in that the manipulating means, in the case of each retaining element, comprise a manipulating lever (53a, 53b) having an arm (56) adapted to be coupled to transmission means (57) accessible to the user.

15. A tool according to claim 14, characterised in that each lever (53a, 53b) is a cranked lever having an arm (56) substantially at right angles to the length of the frame (41), and a second arm (54) substantially at right angles to the first is adapted to be fitted into a control opening (22) belonging to an element (18a, 18b) for retaining a spacer (4).

16. A tool according to any of claims 13 to 15, characterised in that the two manipulating elements (53a, 53b) are movable independently of one another.

17. A tool according to any of claims 13 to 16, characterised in that the positioning means comprise two cups (42a, 42b) spaced in the lengthwise direction of the frame, one cup (42b) opening towards the other cup, which opens in the same direction as the first and faces the locking element (44).

18. A tool according to any ot claims 13 to 17, characterised in that it comprises means (47) for returning the locking element (44) to the position for releasing the spacer, and the means for moving the locking element from the locked position to the released position comprise a catch (48) which, against the action of a spring (51), can be brought from a position in which the locking means, if in the locked position, is retained therein to a position in which the locking means can move to the released position under the action of the return means.

19. A spacer in combination with a positioning tool for working a method according to any of claims 1 to 6, the spacer having an elongate body (8) at each end of Which there is a head (9a, 9b) formed with at least one groove (13a, 13b, 13c) receiving the electric conductor, and a retaining means (18a, 18b) movable with respect to the body between a groove opening position and a position for retaining the electric conductor (1a, 1b) in the groove, characterised in that the tool (6) )has a frame (41) defining two cups (42a, 42b) spaced in the lengthwise direction of the frame and adapted to position each head of the spacer relative to the frame, one cup (42b) opening towards the other cup (42a) which opens in the same direction as the first cup, has a recess (44) for receiving the spacer body (8) and faces a locking means (44) movable with respect to the frame between a position for locking the spacer against the cups and a position for releasing the spacer, means (48, 52) fr moving the locking means from the locked position to the released position, and manipulating means (53a, 53b) for moving the retaining elements belonging to the spacer from the disengaged position to the retaining position.

20. A combination according to claim 19, characterised in that at least one end (9b) of the body (8) of the spacer (4) is formed with two grooves (13a, 13b) spaced lengthwise of the body and separated by a protuberance (26b) having two opposite side edges (27b, 27c) which are inclined so as partly to close the respective adjacent groove.
